# EUROPEAN PATENT APPLICATION

(11) **EP 4 715 897 A1**
(43) Date of publication of application: **25.03.2026**
(21) Application number: 23955978.4
(22) Date of filing: 27.12.2023
(51) Int. Cl.: H01M 4/36, H01M 4/62, H01M 4/505, H01M 4/525, H01M 10/0525

(54) **POSITIVE ELECTRODE MATERIAL AND PREPARATION METHOD THEREFOR, AND LITHIUM ION BATTERY**

(30) Priority: 16.10.2023 CN 202311329054
(71) Applicant: Ningbo Ronbay New Energy Technology Co., Ltd., Yuyao Ningbo, Zhejiang 315402 (CN)
(72) Inventor: TIAN, Huaiyuan, Ningbo, Zhejiang 315402 (CN); CHEN, Haiyang, Ningbo, Zhejiang 315402 (CN); LIU, Yi, Ningbo, Zhejiang 315402 (CN); WANG, Yusheng, Ningbo, Zhejiang 315402 (CN); YAN, Xufeng, Ningbo, Zhejiang 315402 (CN); WANG, Xueying, Ningbo, Zhejiang 315402 (CN)
(74) Representative: J A Kemp LLP
(86) International application number: PCT/CN2023/142530
(87) International publication number: WO 2025/081660

(57) **Abstract**

A positive electrode material and a preparation method thereof, and a lithium-ion battery. The positive electrode material includes: a core layer including Li, Fe, Mn, PO₄⁻ ions, and doping element A; a shell layer, where at least a surface portion of the shell layer is coated on an outer surface of the core layer and the shell layer includes a first carbon particle and a second carbon particle; where the doping element A includes at least one element of Al, Mg, Ni, Co, Ti, Ga, Cu, V, Nb, Zr, Ce, In, Zn and Y; a distance difference between the highest point and the lowest point in a single surface of the positive electrode material is not more than 1 nm, and the surface roughness of the positive electrode material is 0.8µm to 1.6µm. Through the two carbon coating processes, on the basis of ensuring the high capacity and high compaction of the positive electrode material, manganese leaching is greatly reduced, ensuring the cyclic discharge efficiency of the positive electrode material.

## Description

This application claims priority to a Chinese patent application No. 202311329054.8, filed with the China National Intellectual Property Administration (CNIPA) on October 16, 2023, and entitled with "POSITIVE ELECTRODE MATERIAL and PREPARATION METHOD THEREOF, AND LITHIUM-ION BATTERY", which is hereby incorporated by reference in its entirety.

### TECHNICAL FIELD

The present application relates to the technical field of lithium-ion batteries, and in particular to a positive electrode active material and a preparation method thereof and a lithium-ion battery.

### BACKGROUND

With the booming development of electronic products today, there is an increasing demand for portable and reusable secondary batteries. Among the existing secondary battery types, olivine-type positive electrode material has significant potential for application in power lithium-ion batteries due to its numerous advantages.

However, the inherent drawbacks of olivine-structured phosphate compounds themselves, such as low electronic conductivity and slow one-dimensional lithium-ion diffusion rates, severely affect the exertion of electrochemical performance of lithium iron manganese phosphate materials, hindering their further large-scale application. To enhance energy density, the proportion of manganese content is typically increased. However, as the manganese proportion rises, manganese leaching inevitably occurs during material cycling. Currently, carbon coating is commonly used to reduce manganese leaching during material cycling, which not only improves cycling performance but also enhances the conductivity of the material.

However, the existing carbon coating process based on solid-phase dry technology cannot uniformly coat a layer of carbon material onto the material surface. A non-uniform and uneven carbon coating not only fails to address manganese leaching issue but may even impair the material's electrical conductivity.

### SUMMARY

The present application aims to solve at least one of the above-mentioned technical problems.

Therefore, a first objective of the present application is to provide a positive electrode material.

A second objective of the present application is to provide a preparation method for a positive electrode material.

A third objective of the present application is to provide a lithium-ion battery.

In order to achieve the first objective of the present application, the present application provides a positive electrode material including: a core layer including Li, Fe, Mn, PO₄⁻ ions, doping element A; a shell layer, where at least a surface portion of the shell layer is coated on an outer surface of the core layer and the shell layer includes a first carbon particle and a second carbon particle; where, the doping element A includes at least one element of Al, Mg, Ni, Co, Ti, Ga, Cu, V, Nb, Zr, Ce, In, Zn, and Y; a distance difference between the highest point and the lowest point in a single surface of the positive electrode material is not more than 1 nm, and the surface roughness of the positive electrode material is 0.8µm to 1.6µm.

Compared to the prior art, the technical effects achieved by this technical solution are as follows. The core layer includes Li, Fe, Mn, PO₄⁻ ions, and doping element A. By doping manganese into lithium iron phosphate to replace part of the Fe element, lithium manganese iron phosphate material is prepared, which can increase voltage, enhance energy density per unit mass, and offer good compatibility with the voltage of current lithium-ion batteries, thereby reducing the difficulty of mutual substitution.

Furthermore, the doping element A includes at least one element of Al, Mg, Ni, Co, Ti, Ga, Cu, V, Nb, Zr, Ce, In, Zn, and Y. By doping element A into lithium iron phosphate, it not only coordinates the elements within the core layer but also modifies the positive electrode material, thereby enhancing the performance of the positive electrode material. The doping element A can result in Li-site or M-site defects in the lattice of manganese iron phosphate, creating vacancies or altering interatomic bond lengths in the lattice of material, which facilitates Li-ion movement in the lattice and can improve electrochemical performance.

As for the shell layer, at least a surface portion of the shell layer is coated on an outer surface of the core layer, and the shell layer is composed of element C. As the proportion of manganese increases, manganese leaching will be inevitably occurred during the material's cycling process. Coating the surface with carbon particles can reduce manganese leaching. However, it is currently impossible to uniformly coat the material surface with a layer of carbon material. An uneven and rough carbon coating not only fails to improve manganese leaching issue, but may even impair the conductivity of the material. The distance difference between the highest point and the lowest point in the single surface of the positive electrode material is not more than 1 nm, and the surface roughness of the positive electrode material is 0.8µm to 1.6µm. By adjusting the degree of unevenness on the surface, the shell layer of the surface of the positive electrode material is uniformly coated, thereby improving manganese leaching issue and enhancing the conductivity of the material.

In one technical solution of the present application, the average diameter of the first carbon particle is 1µm to 5µm; and/or the average diameter of the second carbon particle is 0.5µm to 1µm.

Compared to the prior art, the technical effect achieved by this technical solution is as follows. The average diameter of the first carbon particle is 1µm to 5µm, and the average diameter of the second carbon particle is 0.5µm to 1µm; the positive electrode material is coated twice through the inter-particle pores of carbon particles with distinct particle sizes. By using the gap difference in the first carbon coating layer, the second carbon particle is introduced to achieve uniform and flat coating, resulting in a positive electrode material with high carbon coating rate and flat coating.

In one technical solution of the present application, the positive electrode material has a composition as shown in formula (I):

Li_{1+aF}e_{1-x-y}MnₓA_{y}(PO_{4-b})•C_{b} Formula (I);

where, value ranges of a, x, y and b are respectively as follows: -0.1≤a≤0.4, 0.5≤x≤0.7, 0.005≤y≤0.05, 0<b≤0.3.

Compared to the prior art, the technical effect achieved by this technical solution is as follows. The positive electrode material prepared by using Li, Fe, and PO₄⁻ as the substrate of the core layer has better electrical conduction performance, along with higher theoretical capacity and conductivity. The synthesis process is relatively simple, enabling large-scale production and research promotion. By adjusting the ratio of different molecules, Li ions need to be deintercalated within the positive electrode material. Adding manganese to partially replace element Fe for the preparation of lithium manganese iron phosphate material can enhance voltage, increase energy density per unit mass, stabilize material structure, prevent significant volume changes, and prolong battery life. However, adding manganese alone will still cause strain in the crystal structure after multiple cycles, and the battery life still cannot be optimized. Therefore, the doping element A is used to further stabilize the crystal structure; and carbon particles are coated on the outer surface of the core layer to prevent manganese leaching caused by increased manganese content, thereby further improving various performance of the positive electrode material. Moreover, by controlling the doping element A and the coating ratio of element C, the coating effect and electrical conductivity are balanced, resulting in the prepared material not only having uniform coating but also exhibiting excellent electrical conductivity.

In one technical solution of the present application, the specific surface area of the positive electrode material is 10m²/g to 25m²/g; and/or the diameter of the core layer is 200 nm to 400 nm; and/or the thickness of the shell layer is 1 nm to 5 nm.

Compared to the prior art, the technical effect achieved by this technical solution is as follows: when the specific surface area of the positive electrode material is 10m²/g to 25m²/g, the cyclic discharge efficiency of the positive electrode material reaches its maximum.

The thickness of the shell layer is 1 nm to 5 nm, and the diameter of the core layer is 200nm to 400nm; by adjusting the thickness of core and shell, it is convenient for Li⁺ ions to deintercalate from the positive electrode during charging, pass through the electrolyte and intercalate into the negative electrode. At the same time, the compensation charge of the electrons is supplied to the negative electrode through the external circuit to ensure the charge balance between the positive and negative electrodes. During discharging, such process is reversed: Li⁺ ions deintercalate from the negative electrode and pass through the electrolyte to intercalate into the positive electrode; meanwhile, it facilitates the permeation of the doping element A.

In one technical solution of the present application, the lightness of the positive electrode material is 0 to 25; and/or the chroma of the positive electrode material is 0 to 3.6.

Compared with the prior art, the technical effect achieved by adopting the technical solution is as follows. The lightness of the positive electrode material is 0 to 25 and the chroma of the positive electrode material is 0 to 3.6; analyzing the results enables effective judgment of the overall carbon coating condition of the prepared positive electrode material of lithium manganese iron phosphate. A carbon layer with appropriate thickness and uniform surface can not only enhance the electrical conductivity of the material but also prevent particle contact to inhibit particle growth, making it easy to obtain nanoscale positive electrode materials.

In one technical solution of the present application, the positive electrode material has a first discharge specific capacity of not less than 160mAh/g at 0.1C within a range of 2.0 V to 4.3 V; and/or the volumetric specific energy density of the positive electrode material is not less than 80mAh/cm³; and/or a cycle retention rate of 200 cycles of the positive electrode material reaches 95.62%.

Compared to the prior art, the technical effects achieved by this technical solution are as follows. The first discharge specific capacity refers to the electric quantity that a battery can release during its first charge-discharge cycle. The first discharge specific capacity is one of key indicators of battery quality, since it directly impacts the battery's service life and performance. The positive electrode material provided in this application has a first discharge specific capacity of not less than 160mAh/g at 0.1C within the range of 2.0V to 4.3V. The cycle retention rate of 200 cycles of the positive electrode material reaches 95.62%. The volumetric specific energy density refers to the ratio of the energy contained by a certain energy source to its volume, reflecting the volume consumed during the use of the battery; and it is one of key indicators of battery quality. The positive electrode material provided in this application exhibits a volumetric specific energy density of not less than 80mAh/cm³. Thereby, it has a high cycle capacity retention rate and a low increase rate in direct current internal resistance. This proves that the positive electrode material of this application possesses excellent performance and has a long service life, and is cost-effective.

In one technical solution of the present application, the preparation method includes the following steps:
S100, mixing a Li source, a Mn source, a Fe source, a P source, and a dopant containing a doping element A, sequentially performing a preheating treatment, a pulverization treatment, and a drying treatment, and a primary sintering treatment under a reducing atmosphere to obtain a first positive electrode material;
S200: subjecting the first positive electrode material and a first carbon particle to a secondary sintering treatment under the reducing atmosphere to obtain a second positive electrode material;
S300: adding a second positive electrode material, a second carbon particle and a binder in sequence for premixing treatment, and then performing a tertiary sintering treatment under the reducing atmosphere to obtain the positive electrode material;
where the first carbon particle has an average diameter of 1µm to 5µm;
the second carbon particle has an average diameter of 0.5µm to 1µm.

Compared to the prior art, the technical effects achieved by this technical solution are as follows. In step S100, the first positive electrode material, that is the core layer, can be obtained by the primary sintering; by adding the dopant A to exert a synergistic effect, the interior of the core layer is adjusted, thereby enhancing the performance of the positive electrode material. In the secondary sintering of step S200, element C is coated on the surface of the core layer by the secondary sintering. However, due to the uneven and rough surface resulting from single coating, this not only fails to improve the problem of manganese leaching but may even affect the electrical conductivity of the material. Therefore, where the average diameter of the first carbon particle is 1µm to 5µm, and the average diameter of the second carbon particle is 0.5µm to 1µm, the positive electrode material is coated twice through the inter-particle pores of carbon particles with different particle sizes. By using the gap difference in the first carbon coating layer, the second carbon particle is introduced to achieve uniform and flat coating, obtaining the positive electrode material with high carbon coating ratio and smooth coating. Therefore, through two carbon coating processes, on the basis of ensuring high capacity and high compaction of the positive electrode material, manganese leaching is significantly reduced, thereby ensuring the cyclic discharge efficiency of the positive electrode material.

In one technical solution of the present application, in S100, the molar ratio of the Li source, the Mn source + the Fe source, the P source, and the dopant is (1.01-1.04):(0.98-1):1:(0.05-0.1); and/or, in S200, the molar ratio of the first positive electrode material to the first carbon particle is 100:(0.5-1); and/or, in S300, the molar ratio of the second positive electrode material, the second carbon particle and the binder is 100:(0.5-0.8):(0.2-0.5).

Compared to the prior art, the technical effects achieved by this technical solution are as follows. By adjusting the molar ratio of the Li source, Mn source, Fe source, P source, and dopant, the performance of the positive electrode material is optimized. The carbon content in the tertiary sintering is lower than that in the secondary sintering. The surface of the positive electrode material after the primary sintering has been already fully coated, but it is rough and uneven. The second coating achieved by the tertiary sintering provides a more complete surface coating, ultimately producing an olivine-shaped positive electrode material with uniform and smooth carbon coating.

In one technical solution of the present application, the pulverization treatment is sequentially performed by ball milling treatment and sand milling treatment; where, when the median particle size of the mixed material for the ball milling treatment is not more than 1µm, the mixed material is transferred to the sand milling treatment; the diameter of the medium for the ball milling treatment is not more than 0.8µm; and/or, the diameter of the medium for the sand milling treatment is not more than 0.3µm.

Compared to the prior art, the technical effects achieved by this technical solution are as follows. After the preheating treatment, the pulverization treatment is performed. The ball milling treatment is carried out firstly; the diameter of the medium for the ball milling treatment is not more than 0.8µm; after the median particle size of the mixed material is not more than 1µm, the mixed material is transferred to the sand milling treatment; the diameter of the medium for the sand milling treatment is not more than 0.3µm. By first using the ball milling to rapidly pulverize the mixed materials before the sand milling, it is suitable for industrial production and reduces costs.

In one technical solution of the present application, the following is further included. In S100, a median particle size of a particulate matter after the pulverization treatment is not more than 6µm; and/or, in S100, a median particle size of the particulate matter after the drying treatment is not more than 4µm; and/or, in S200, the first carbon particle has an average particle size of 1µm to 5µm; and/or, in S200, a powder compaction density of the first carbon particle at 2T pressure is 3.00g/cm³ to 3.20g/cm³; and/or, in S300, the binder includes any one of polyvinylidene fluoride, polyamide, polyimide, polyacrylic acid, polyvinyl alcohol, and styrene butadiene rubber, or a combination of two or more thereof.

Compared to the prior art, the technical effects achieved by this technical solution are as follows. By continuously adjusting particle size, the median particle size of the particulate matter after the pulverization treatment is not more than 6µm; the median particle size of the particulate matter after the drying treatment is not more than 4µm. Furthermore, the particle size of the first coating carbon is greater than that of the second coating carbon, thereby controlling the thickness of the positive electrode material within the optimal range. Furthermore, the powder compaction density of the first carbon particle under 2T pressure is 3.00g/cm³ to 3.20g/cm³, enabling an excellent normal distribution of particles in the positive electrode material, which can increase the discharge capacity of the battery, reduce internal resistance, lower polarization loss, prolong the cycle life of the battery, and improve the utilization rate of lithium-ion battery. However, when the compaction density is too high or too low, it is not conducive to the intercalation and deintercalation of lithium-ions.

In one technical solution of the present application, in S100, a temperature of the preheating treatment is 50°C to 100°C; and/or, in S100, a time of the preheating treatment is from 0.1h to 1h; and/or, in S100, a temperature of the primary sintering treatment is 500°C to 800°C; and/or, in S100, a time of the primary sintering treatment is 8 h to 14 h; and/or, in S200, a temperature of the secondary sintering treatment is 500°C to 800°C; and/or, in S200, a time of the secondary sintering treatment is 6 h to 12 h; and/or, in S300, a time of the premixing treatment is 1h to 1.5h; and/or, in S300, a temperature of the tertiary sintering treatment is 500°C to 800°C; and/or, in S300, a time of the tertiary sintering treatment is 6 h to 12 h.

Compared to the prior art, the technical effects achieved by this technical solution are as follows. By controlling reaction temperature and time, and heating rate, the construction of the core and shell layers are achieved. Specifically, through a staged sintering process and specific process parameters, the first positive electrode material is obtained by sintering. Firstly, a preheating treatment is performed, where, during the preheating stage, the temperature is relatively low, and the mixture of Li source, Mn source, Fe source, P source, and dopant thermally decomposes into precursors; and the sintering time is controlled to 0.1h-1h. Then, the primary sintering is performed to enable the raw materials to fully decompose and combine to form a nickel-cobalt-manganese-lithium compound, and the sintering temperature is raised at a rate of 1°C/min to 4°C/min to 500 to 800°C, and the sintering time is 8 to 14h. Further, a secondary sintering with increased temperature is performed to coat the first positive electrode material with carbon element, and the secondary sintering time is 6 to 12h. Finally, a further sintering of the second positive electrode material is performed to modify its morphology, and the sintering time and temperature are the same as the secondary sintering, thereby achieving uniform coating.

The present application also provides a lithium-ion battery including the positive electrode material according to any one of the above-mentioned technical solutions. Therefore, it has all the beneficial effects of any one of the above-mentioned technical solutions, which will not be repeated here.

After adopting the technical solution of the present application, the following technical effects can be achieved.

(1) In this application, the positive electrode material is coated twice through the inter-particle pores of carbon particles with distinct particle sizes. By using the gap difference in the first carbon coating layer, the second coating is introduced to allow its small-particle carbon element to enter into the surface gaps of the positive electrode material, and fill the gaps, thereby achieving uniform and smooth coating of the positive electrode material, and obtaining a positive electrode material with high carbon coating ratio. This not only ensures high capacity and high compaction of the positive electrode material, but also significantly reduces manganese leaching, while ensuring the cyclic discharge efficiency of the positive electrode material.

(2) The carbon-coated positive electrode material and the preparation method of the present application are simple in processing, and the prepared carbon-coated positive electrode material can maintain high capacity and have good discharge performance.

### BRIEF DESCRIPTION OF DRAWINGS

In order to explain the technical solutions more clearly in the embodiments of the present application, the drawings to be used in the description of the embodiments will be briefly introduced below. It is obvious that the drawings in the following description are only some embodiments of the present application, and for those skilled in the art, other drawings can also be obtained from these drawings without creative work.
FIG. 1 is an SEM image of a second positive electrode material after a secondary sintering according to an embodiment of the present application.
FIG. 2 is an SEM image of a positive electrode material after a tertiary sintering according to an embodiment of the present application.
FIG. 3 is an SEM image of a positive electrode material provided in a Comparative Example of the present application.
FIG. 4 is a schematic diagram of a secondary sintering followed by a tertiary sintering coating provided by an embodiment of the present application.

### DESCRIPTION OF EMBODIMENTS

In order to make the above-mentioned objectives, features and advantages of the present application more obvious and easier to understand, the technical solutions in the embodiments of the present application are clearly and completely described. It is obvious that the described embodiments are only a part of the embodiments of the present application, but not all of the embodiments. Based on the embodiments in the present application, all other embodiments obtained by those skilled in the art without creative work shall fall within the scope of protection of the present application.

Olivine-type positive electrode material has significant potential in the application of power lithium-ion batteries due to its numerous advantages. However, the inherent drawbacks of phosphate compounds with olivine structure, such as low electronic conductivity and slow one-dimensional lithium-ion diffusion rates, severely affect the exertion of electrochemical performance of lithium manganese iron phosphate materials, hindering their further large-scale application. To enhance energy density, the proportion of manganese content is typically increased. However, as the manganese proportion rises, manganese leaching inevitably occurs during material cycling.

Currently, carbon coating is commonly used to mitigate the problem of manganese leaching during material cycling, which can not only improve cycling performance but also enhance the electrical conductivity of the material. However, the existing carbon coating process based on solid-phase dry technology cannot uniformly coat a layer of carbon material onto the material surface; and a non-uniform and uneven carbon coating not only fails to address manganese leaching issue but may even impair the material's electrical conductivity.

Therefore, the present application provides a method for preparing a positive electrode material, as well as the positive electrode material prepared and a battery prepared using the positive electrode material. Through two carbon coating processes, manganese leaching is significantly reduced on the basis of maintaining the high capacity and high compaction of the positive electrode material, thereby ensuring the cyclic discharge efficiency of the positive electrode material.

Specifically, a Li source, a Mn source, a Fe source, a P source, and a dopant containing a doping element A are mixed, and sequentially subjected to a preheating treatment, a pulverization treatment, a drying treatment, and a primary sintering treatment under a reducing atmosphere to obtain a first positive electrode material.

Preferably, the Li source includes one or more of lithium dihydrogen phosphate, lithium carbonate, and lithium hydroxide; the Mn source includes one or more of manganese carbonate and trimanganese tetroxide; the Fe source includes one or more of iron hydroxide, iron phosphate, and iron tetroxide; the P source includes one or more of iron phosphate and magnesium phosphate; the dopant includes one or more of magnesium oxide, and magnesium carbonate. The material and deionized water are mixed and subjected to preheating treatment to thermally decompose into a precursor.

Preferably, the molar ratio of the Li source, the Mn source + the Fe source, the P source and the dopant is (1.01-1.04):(0.98-1):1:(0.05-0.1); and preferably, the molar ratio of the Mn source to Fe source is 1:(0.66-2). The stirring vessel can be selected for the preheating treatment, with the rotating speed being 500rmp to 1500rmp, the temperature being 120°C to 180°C, and the time being 0.1h to 1h; and the reducing atmosphere is preferably nitrogen or argon.

Further, the precursor is subjected to the pulverization treatment, where the pulverization treatment is sequentially performed by ball milling treatment and sanding treatment. High-energy ball mill can be selected for the ball milling treatment, the diameter of the medium for ball milling treatment is not more than 0.8µm, the time for ball milling treatment in the high-energy ball mill is 1h to 3h, and the rotating speed for the ball milling treatment is 1000rpm to 3000rpm.

Preferably, when the median particle size of the mixed material for the ball milling treatment is not more than 1µm, the mixed material is transferred to the sand milling treatment. Using two-stage pulverization treatment is suitable for industrial production and reduces cost. Preferably, a high-energy sand mill can be used for the sand milling treatment, and the diameter of the medium for the sand milling treatment is not more than 0.3µm; the time for sand milling treatment is 2h to 5h in the high-energy sand mill, and the rotating speed for the ball milling treatment is 1000rpm to 3000rpm, so that the median particle size of the mixed particulate matters is not more than 6µm, which is convenient for the subsequent steps.

Further, a centrifugal spray dryer can be selected for the drying treatment, where the inlet air temperature is 200°C to 500°C, the outlet air temperature is 100°C to 300°C, the rotating speed of the atomizing disk is 15,000rpm to 30,000rmp, and the feeding rate is 40 L • h-1, so that the median particle size of its particulate matter is not more than 4µm. The primary sintering treatment is performed under a reducing atmosphere to obtain the first positive electrode material, the first positive electrode material is obtained, making the primary sintering more uniform and allowing the doping elements to penetrate the core layer more effectively; in the primary sintering, the temperature is raised to 500°C to 650°C at a rate of 1°C/min to 4°C/min, with a holding time of 8 to 12h.

Specifically, the first positive electrode material and the first carbon particle are subjected to the secondary sintering treatment under a reducing atmosphere to obtain the second positive electrode material; the surface of the core layer is coated with element C by the secondary sintering, and the content of the first carbon is 0.9% of the positive electrode material. In the secondary sintering, the temperature is raised to 600°C to 700°C at a rate of 1°C/min to 4°C/min, and the time of the secondary sintering is 6h to 10h.

Further, since the surface caused by the first coating is uneven and rough, not only the problem of manganese leaching cannot be improved, but the electrical conductivity of the material can be even affected. Therefore, the second positive electrode material, the second carbon particle and the binder are sequentially added and mixed for 1h to 1.5h, so that the secondary small particle carbon fully enters the gap; and then the secondary coating, i.e, the tertiary sintering, is carried out. The content of the second carbon is 0.6% of the positive electrode material; in the tertiary sintering, the temperature is raised at a rate of 1°C/min to 4°C/min to 650°C to 750°C, and the time of the secondary sintering is 6h to 10h. The second positive electrode material is sintered again to modify its morphology, with the sintering being the same time and temperature as that of the secondary sintering, ensuring uniform coating.

Where, the test methods of lightness and chroma are as follows: L represents lightness; a and b represent chromaticity; and the color difference value △E=[(△L)²+△ a)²+(△b)²]^{1/2}. A spectrophotometer is used to measure the colorimetric value of the sample, where the material is attached tightly to the probe of the colorimeter; the major axis of the lens is perpendicular to the surface of sample to be measured; the light source of the probe flashes continuously for three times and then released to record the value.

### Example 1

S100: the elements Li: Mn: Fe: P were mixed at a molar ratio of 1.04: 0.6: 0.4: 1, deionized water was add and mixed thoroughly in a mixing vessel; a preheating treatment was performed at a heating temperature of 120°C with a rotation speed of 1000rpm for 0.5hours; a pulverization treatment was carried out; a drying treatment was performed in a centrifugal spray dryer with an air-inlet temperature of 220°C, an air-outlet temperature of 100°C, an atomizing disk speed of 30,000rpm, and a feeding rate of 40 L/h; a primary sintering treatment was performed at 650°C for 10h under a nitrogen atmosphere to obtain the first positive electrode material;
where, the pulverization treatment was first carried out in a high-energy ball mill, and the medium for ball milling in the high-energy ball mill was zirconia bead with a diameter of 0.8µm. The ball milling treatment was conducted at a rotating speed of 1500rpm for 2h. Once the median particle size D50 of the particulate matter reaches 1µm, the material was transferred to a high-energy sand mill, where the diameter of zirconia beads was 0.3µm, and the sand milling time was 3h.

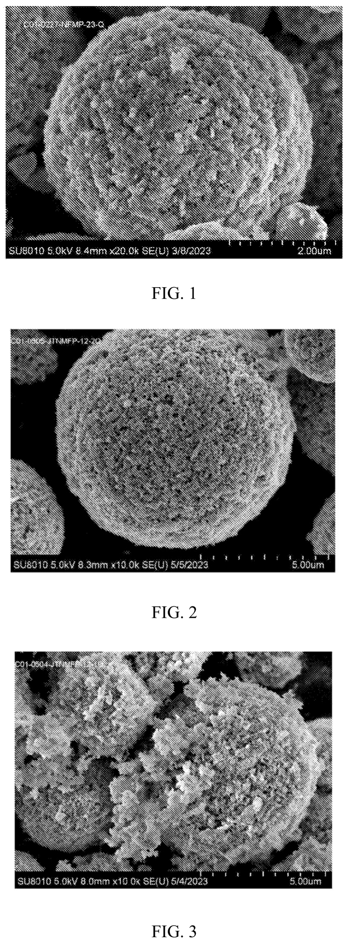

S200: the first positive electrode material and the first carbon particles were mixed at a molar ratio of 100: 0.9, and subjected to a secondary sintering treatment at a temperature of 680°C for 8h under a nitrogen atmosphere to obtain a second positive electrode material, as shown in FIG. 1;
where, the average diameter of the first carbon particles was in the range of 1 µm to 5µm, and the powder compaction density of the first carbon particles was 3.00g/cm³ to 3.20g/cm³.

S300: the second positive electrode material, second carbon particles, and PVDF were added sequentially and then mixed at a molar ratio of 100: 0.6: 0.3 for 1hour, and subjected to a tertiary sintering treatment at 700°C for 8h under a nitrogen atmosphere to obtain the positive electrode material, as shown in FIG. 2;
where the average diameter of the second carbon particles was in the range of 0.5µm to 1µm.

### Example 2

This example provides a lithium-ion battery and a preparation method thereof, where the preparation method is shown in Example 1, except that the selection and the molar ratio of each component are different; and the details are shown in Table 1.

**Table 1**

| Items | Mn: Fe | Molar ratio of primary sintering | Molar ratio of secondary sintering | Molar ratio of tertiary sintering |
|---|---|---|---|---|
| 1-1 | 1:0.66 | 1.01:0.98:1:0.05 | 100:0.5 | 100:0.5:0.2 |
| 1-2 | 1:0.86 | 1.02:0.99:1:0.06 | 100:0.6 | 100:0.6:0.3 |
| 1-3 | 1:1 | 1.03:1:1:0.06 | 100:0.7 | 100:0.7:0.3 |
| 1-4 | 1:1.26 | 1.04:0.98:1:0.06 | 100:0.8 | 100:0.8:0.4 |
| 1-5 | 1:1.4 | 1.01:0.99:1:0.07 | 100:0.9 | 100:0.5:0.3 |
| 1-6 | 1:1.66 | 1.02:1:1:0.08 | 100:1 | 100:0.6:0.2 |
| 1-7 | 1:1.86 | 1.03:0.98:1:0.09 | 100:0.5 | 100:0.7:0.5 |
| 1-8 | 1:2 | 1.04:0.99:1:0.1 | 100:0.6 | 100:0.8:0.4 |

### Example 3

This example provides a lithium-ion battery and a preparation method thereof, where the preparation method is shown in Example 1, except that the selection of doping element and binder of each component is different; and the details are shown in Table 2.

**Table 2**

| Items | Doping element | Binder | Protective atmosphere |
|---|---|---|---|
| 2-1 | Al | Polyamide | Nitrogen |
| 2-2 | Mg | Polyimide | Argon |
| 2-3 | Ni | Polyacrylic acid | Nitrogen |
| 2-4 | Co | Polyvinyl alcohol | Argon |
| 2-5 | Ti | Styrene butadiene rubber | Nitrogen |
| 2-6 | Ga | PVDF, Polyamide | Argon |
| 2-7 | Cu | Polyimide, polyacrylic acid | Nitrogen |
| 2-8 | V | Polyvinyl alcohol, styrene butadiene rubber | Argon |
| 2-9 | Nb | PVDF, polyimide | Nitrogen |
| 2-1 | Zr | Polyacrylic acid, polyvinyl alcohol | Argon |
| 2-11 | Ce | PVDF, styrene butadiene rubber | Nitrogen |
| 2-12 | In | Polyamide | Argon |
| 2-13 | Zn | Polyimide | Nitrogen |
| 2-14 | Y | Polyacrylic acid | Argon |

### Example 4

This example provides a lithium-ion battery and a preparation method thereof, where the preparation method is shown in Example 1, except that each process parameter is different; and the details are shown in Table 3.

**Table 3**

| Example | | 3-1 | 3-2 | 3-3 | 3-4 | 3-5 | 3-6 |
|---|---|---|---|---|---|---|---|
| Preheating treatment | Rotating speed/rmp | 500 | 800 | 1000 | 1200 | 1400 | 1500 |
| | Temperature/°C | 120 | 130 | 140 | 150 | 160 | 180 |
| | Time/min | 30 | 35 | 40 | 45 | 50 | 60 |
| Pulverization treatment | Rotating speed of ball milling/rmp | 1000 | 1300 | 1500 | 2000 | 2500 | 3000 |
| | Ball milling time/h | 1 | 1.5 | 1.8 | 2 | 2.5 | 3 |
| | Rotating speed of sand milline/rmp | 1000 | 1300 | 1500 | 2000 | 2500 | 3000 |
| | Sand milling time/h | 2 | 2.5 | 3.5 | 4 | 4.5 | 5 |
| Drying treatment | Inlet air temperature/°C | 200 | 250 | 300 | 400 | 450 | 500 |
| | Outlet air temperature/°C | 100 | 150 | 200 | 230 | 250 | 300 |
| | Rotating speed/rmp | 15000 | 17000 | 20000 | 25000 | 28000 | 30000 |
| Primary sintering | Calcining temperature/°C | 500 | 550 | 580 | 600 | 620 | 650 |
| | Calcining time/h | 8 | 9 | 9.5 | 10 | 11 | 12 |
| | Heating rate °C/min | 1 | 2 | 2.5 | 3 | 3.5 | 4 |
| Secondary sintering | Calcining temperature/°C | 600 | 620 | 640 | 660 | 670 | 700 |
| | Calcining time/h | 6 | 7 | 8 | 8.5 | 9 | 10 |
| | Heating rate °C/min | 1 | 2 | 2.5 | 3 | 3.5 | 4 |
| Tertiary sintering | Premixing time/h | 1 | 1.1 | 1.2 | 1.3 | 1.4 | 1.5 |
| | Calcining temperature/°C | 650 | 670 | 690 | 710 | 730 | 750 |
| | Calcining time/h | 6 | 7 | 8 | 8.5 | 9 | 10 |
| | Heating rate °C/min | 1 | 2 | 2.5 | 3 | 3.5 | 4 |

### Comparative Example 1

This example provides a lithium-ion battery and a preparation method thereof, where the preparation method is shown in Example 1, except that a first positive electrode material and a first carbon particles are mixed at a molar ratio of 100: 1.8 in S200; where the average diameter of the first carbon particles is in a range of 1.2µm to 5.2µm, and the powder compaction density of the first carbon particles is 3.50g/cm³-3.80g/cm³.

### Comparative Example 2

This example provides a lithium-ion battery and a preparation method thereof, where the preparation method is shown in Example 1, except that the first positive electrode material and other metal sources are mixed at a molar ratio of 100: 0.2 in S200, as shown in FIG. 3.

### Comparative Example 3

This example provides a lithium-ion battery and a preparation method thereof, where the preparation method is shown in Example 1, except that the average diameter of the second carbon particles is in the range of 1.1µm to 1.5µm in S200.

### Comparative Example 4

This example provides a lithium-ion battery and a preparation method thereof, where the preparation method is shown in Example 1, except that no binder is added in S300.

For Examples 1-4 and Comparative Examples 1-4 described above, the following methods are used by those skilled in the art for measuring the positive electrode material, and specific data are shown in Table 4.

First discharge specific capacity at 0.1C within the range of 2.0V to 4.3V: the assembled button battery is tested in a LAND (blue energy) equipment under the following conditions: the test temperature of 25±1°C, the test voltage of 2.0V to 4.3V, 0.1C/0.1C charge and discharge, and the charge cut-off current of 0.05C.

Cycle retention rate of 200 cycles: the full battery is tested by Xinwei CT3008-5V3A-A1 at 0°C, with a cyclic voltage range of 2V to 4V and a constant-voltage cut-off current of 20mA, undergoing 200 cycles.

Lightness and chroma: L represents lightness, a and b represent chromaticity, and the color difference value △E=[(△L)²+△a)²+(△b)²]^{1/2}. A spectrophotometer is used to measure the colorimetric value of the sample, where the material is attached tightly to the probe of the colorimeter; the major axis of the lens is perpendicular to the surface of sample to be measured; the light source of the probe flashes continuously for three times and then the probe is released to record the value.

Distance difference between highest and lowest points in a single surface: it is shown on TEM image.

Surface roughness: the equipment is a surface roughness tester. The tester's stylus is guided by a constant-speed drive to make it vertically contact the surface of a workpiece to be measured. It moves transversely along the surface of the workpiece to be measured. The stylus movement effectively characterizes the profile of the surface. Furthermore, the tiny changes during the stylus movement are converted into electrical signals via a sensor. After computational processing, the surface roughness value is displayed on the screen.

**Table 4**

| Items | First discharge specific capacity | Cycle retention rate of 200 cycles | Lightness | Chroma | Distance between the highest and lowest points in a single surface | Surface roughness |
|---|---|---|---|---|---|---|
| Example 1 | 158.9 | 98.78 | 10.9 | 0.64 | 0.20 | 0.87 |
| Example 1-1 | 154.2 | 98.65 | 12.3 | 0.62 | 0.54 | 1.32 |
| Example 1-2 | 155.6 | 97.60 | 16.5 | 0.83 | 0.37 | 1.20 |
| Example 1-3 | 156.9 | 95.06 | 16.8 | 1.06 | 0.31 | 1.00 |
| Example 1-4 | 154.5 | 95.10 | 17.2 | 1.11 | 0.45 | 1.34 |
| Example 1-5 | 154.6 | 96.23 | 18.6 | 1.20 | 0.47 | 1.37 |
| Example 1-6 | 156.2 | 95.29 | 13.7 | 0.86 | 0.34 | 1.18 |
| Example 1-7 | 156.6 | 96.20 | 12.9 | 0.80 | 0.28 | 1.11 |
| Example 1-8 | 155.4 | 95.84 | 13.9 | 0.93 | 0.34 | 1.25 |
| Example 2-1 | 156.9 | 97.31 | 12.8 | 0.92 | 0.27 | 1.07 |
| Example 2-2 | 159.6 | 97.92 | 9.9 | 0.58 | 0.22 | 0.91 |
| Example 2-3 | 156.5 | 97.10 | 14.9 | 1.28 | 0.28 | 1.09 |
| Example 2-4 | 158.1 | 97.35 | 10.8 | 0.68 | 0.24 | 1.01 |
| Example 2-5 | 156.7 | 96.42 | 12.7 | 0.83 | 0.27 | 1.08 |
| Example 2-6 | 157.3 | 97.06 | 12.4 | 0.80 | 0.24 | 1.01 |
| Example 2-7 | 157.9 | 96.87 | 11.6 | 0.72 | 0.19 | 0.99 |
| Example 2-8 | 157.2 | 96.59 | 12.2 | 0.85 | 0.23 | 1.04 |
| Example 2-9 | 156.4 | 95.83 | 13.4 | 0.92 | 0.29 | 1.13 |
| Example 2-10 | 157.6 | 96.75 | 12.1 | 0.78 | 0.24 | 1.07 |
| Example 2-11 | 157.5 | 97.01 | 12.0 | 0.86 | 0.23 | 1.06 |
| Example 2-12 | 156.9 | 96.56 | 13.5 | 1.02 | 0.29 | 1.14 |
| Example 2-13 | 156.8 | 95.97 | 13.8 | 0.99 | 0.30 | 1.16 |
| Example 2-14 | 156.9 | 96.24 | 12.5 | 0.89 | 0.29 | 1.15 |
| Example 3-1 | 154.8 | 95.83 | 15.6 | 1.34 | 0.51 | 1.38 |
| Example 3-2 | 155.0 | 96.02 | 12.5 | 1.20 | 0.48 | 1.35 |
| Example 3-3 | 155.1 | 95.79 | 12.7 | 1.15 | 0.48 | 1.36 |
| Example 3-4 | 154.7 | 96.40 | 15.1 | 1.52 | 0.53 | 1.41 |
| Example 3-5 | 154.9 | 96.34 | 14.5 | 1.47 | 0.51 | 1.39 |
| Example 3-6 | 155.4 | 96.02 | 14.1 | 1.32 | 0.47 | 1.35 |
| Comparative Example 1 | 149.6 | 90.52 | 25.3 | 3.80 | 1.12 | 1.71 |
| Comparative Example 2 | 148.3 | 91.08 | 26.1 | 4.03 | 1.19 | 1.80 |
| Comparative Example 3 | 147.8 | 92.02 | 24.3 | 3.62 | 1.14 | 1.84 |
| Comparative Example 4 | 148.2 | 91.37 | 25.2 | 3.77 | 1.18 | 1.74 |

When the positive electrode materials from Examples 1-4 and Comparative Examples 1-4 are fabricated into batteries, the first discharge specific capacity at 0.1C is 154mAh/g within the voltage range of 2.0 V to 4.3 V; after 200 cycles, the cycle retention rate reaches 95.62%.

It can be seen from Example 1 and Comparative Example 2 that the first positive electrode material is coated with a layer of porous carbon, which can effectively suppress the growth of the first positive electrode material particles; by adding a new carbon layer, the second layer of carbon can fill the voids in the first layer. The double carbon layer formed by the inner and outer carbon layers can improve the electrical conductivity of the material, which is conductive to improving its electrochemical performance.

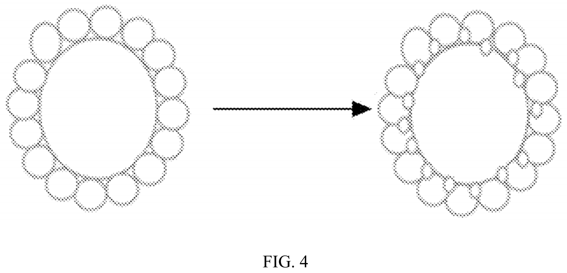

This demonstrates that defining the particle size of carbon twice and compaction can make it uniformly coat the surface of the positive electrode material, as shown in FIG. 4. Since the first carbon coating inevitably results in non-uniform coverage, the second coating with smaller carbon particles allows smaller carbon particles to enter into the surface gaps of the positive electrode material, and fill these gaps. Thus, a positive electrode material with high carbon coating ratio is obtained. Finally, high-speed mix polishing makes a uniform and smooth carbon coating on the surface of the positive electrode material, ultimately producing an olivine-type positive electrode material with uniform and smooth carbon coating. Through two carbon coating processes, on the basis of ensuring the high capacity and high compaction of the positive electrode material, manganese leaching is greatly reduced, ensuring the cyclic discharge efficiency of the positive electrode material.

Finally, it should be noted that the above embodiments are merely used to illustrate the technical solutions of the present application, and are not intended to limit them; although the present application has been described in detail with reference to the foregoing embodiments, those skilled in the art should understand that the technical solutions described in the foregoing embodiments can still be modified, or some technical features therein can be equivalently replaced. However, these modifications or replacements do not cause the essence of corresponding technical solutions to deviate from the spirit and scope of the technical solutions of embodiments of the present application.

## Claims

1. A positive electrode material, comprising:
a core layer comprising Li, Fe, Mn, PO₄⁻ ions, doping element A;
a shell layer, wherein at least a surface portion of the shell layer is coated on an outer surface of the core layer, and the shell layer comprises a first carbon particle and a second carbon particle;
wherein the doping element A comprises at least one element of Al, Mg, Ni, Co, Ti, Ga, Cu, V, Nb, Zr, Ce, In, Zn, and Y;
a distance difference between a highest point and a lowest point in a single surface of the positive electrode material is not more than 1 nm, and a surface roughness of the positive electrode material is 0.8µm to 1.6µm.

2. The positive electrode material according to claim 1, wherein
an average diameter of the first carbon particle is 1µm to 5µm.

3. The positive electrode material according to claim 1 or 2, wherein an average diameter of the second carbon particle is 0.5µm to 1µm.

4. The positive electrode material according to claim 1, wherein the positive electrode material has a composition as shown in formula (I):
Li₁₊ₐFe_{1-x-y}MnₓA_{y}(PO_{4-b})•C_{b} Formula (I);
wherein, value ranges of a, x, y, and b are respectively as follows: -0.1≤a≤0.4, 0.5≤x≤0.7, 0.005≤y≤0.05, 0<b≤0.3.

5. The positive electrode material according to claim 1, wherein a specific surface area of the positive electrode material is 10 m²/g to 25 m²/g.

6. The positive electrode material according to claim 1 or 5, wherein a diameter of the core layer is 200 nm to 400 nm.

7. The positive electrode material according to any one of claims 1, 5, and 6, wherein a thickness of the shell layer is 1 nm to 5 nm.

8. The positive electrode material according to claim 1, wherein a lightness of the positive electrode material is 0 to 25.

9. The positive electrode material according to claim 1 or 8, wherein a chroma of the positive electrode material is 0 to 3.6.

10. The positive electrode material according to claim 1, wherein the positive electrode material has a first discharge specific capacity of not less than 160mAh/g at 0.1C within a range of 2.0 V to 4.3 V.

11. The positive electrode material according to claim 1 or 10, wherein a volumetric specific energy density of the positive electrode material is not less than 80mAh/cm³.

12. The positive electrode material according to any one of claims 1, 10, and 11, wherein a cycle retention rate of 200 cycles of the positive electrode material reaches 95.62%.

13. A preparation method for a positive electrode material, wherein the preparation method comprises the following steps:
S100: mixing a Li source, a Mn source, a Fe source, a P source, and a dopant containing a doping element A, sequentially performing a preheating treatment, a pulverization treatment, and a drying treatment, and performing a primary sintering treatment under a reducing atmosphere to obtain a first positive electrode material;
S200: subjecting the first positive electrode material and a first carbon particle to a secondary sintering treatment under the reducing atmosphere to obtain a second positive electrode material;
S300: adding the second positive electrode material, a second carbon particle and a binder in sequence for premixing treatment, and then performing a tertiary sintering treatment under the reducing atmosphere to obtain the positive electrode material;
wherein the first carbon particle has an average diameter of 1µm to 5µm;
the second carbon particle has an average diameter of 0.5µm to 1µm.

14. The preparation method according to claim 13, wherein in S100, a molar ratio of the Li source, the Mn source + the Fe source, the P source, and the dopant is (1.01-1.04):(0.98-1):1:(0.05-0.1).

15. The preparation method according to claim 13 or 14, wherein in S200, a molar ratio of the first positive electrode material to the first carbon particle is 100:(0.5-1).

16. The preparation method according to any one of claims 13-15, wherein in S300, a molar ratio of the second positive electrode material, the second carbon particle and the binder is 100:(0.5-0.8):(0.2-0.5).

17. The preparation method according to claim 13, wherein in S100:
the pulverization treatment is sequentially performed by ball milling treatment and sand milling treatment;
wherein, when a median particle size of a mixed material for the ball milling treatment is not more than 1µm, the mixed material is transferred to the sand milling treatment;
a medium for the ball milling treatment has a diameter of not more than 0.8µm.

18. The preparation method according to claim 13 or 17, wherein in S100:
a medium of the sand milling treatment has a diameter of not more than 0.3µm.

19. The preparation method according to claim 13, wherein
in S100, a median particle size of a particulate matter after the pulverization treatment is not more than 6µm.

20. The preparation method according to claim 13 or 19, wherein
in S100, a median particle size of a particulate matter after the drying treatment is not more than 4µm.

21. The preparation method according to any one of claim 13, 19 or 20, wherein
in S200, the first carbon particle has an average particle size of 1µm to 5µm.

22. The preparation method according to any one of claims 13 and 19-21, wherein
in S200, a powder compaction density of the first carbon particle at 2T pressure is 3.00g/cm³ to 3.20g/cm³.

23. The preparation method according to any one of claims 13 and 19-22, wherein
in S300, the binder comprises any one of polyvinylidene fluoride, polyamide, polyimide, polyacrylic acid, polyvinyl alcohol, and styrene butadiene rubber, or a combination of two or more thereof.

24. The preparation method according to claim 13, wherein
in S100, a temperature of the preheating treatment is 120°C to 180°C.

25. The preparation method according claim 13 or 24, wherein
in S100, a time of the preheating treatment is 0.1h to 1h.

26. The preparation method according to any one of claim 13, 24 or 25, wherein
in S100, a temperature of the primary sintering treatment is 500°C to 650°C.

27. The preparation method according to any one of claims 13 and 24-26, wherein
in S100, a time of the primary sintering treatment is 8 h to 12 h.

28. The preparation method according to any one of claims 13 and 24-27, wherein
in S200, a temperature of the secondary sintering treatment is 600°C to 700°C.

29. The preparation method according to any one of claims 13 and 24-28, wherein
in S200, a time of the secondary sintering treatment is 6 h to 10 h.

30. The preparation method according to any one of claims 13 and 24-29, wherein
in S300, a time of the premixing treatment is 1h to 1.5h.

31. The preparation method according to any one of claims 13 and 24-30, wherein
in S300, a temperature of the tertiary sintering treatment is 650°C to 750°C.

32. The preparation method according to any one of claims 13 and 24-31, wherein
in S300, a time of the tertiary sintering treatment is 6 h to 10 h.

33. A lithium-ion battery, comprising the positive electrode material according to any one of claims 1-12.
